(19) Europäisches Patentamt / European Patent Office / Office européen des brevets

(11) **EP 2 616 833 B1**

(12) **FASCICULE DE BREVET EUROPEEN**

(45) Date de publication et mention de la délivrance du brevet:
**15.07.2015 Bulletin 2015/29**

(51) Int Cl.:
*G01S 5/02* *(2010.01)*          *G01S 5/06* *(2006.01)*
*G01S 5/14* *(2006.01)*          *G01S 5/10* *(2006.01)*

(21) Numéro de dépôt: **11755289.3**

(22) Date de dépôt: **23.08.2011**

(86) Numéro de dépôt international:
**PCT/EP2011/064420**

(87) Numéro de publication internationale:
**WO 2012/034832 (22.03.2012 Gazette 2012/12)**

(54) **PROCEDE ET SYSTEME APTE A EXPLOITER DES TRAJETS INDIRECTS DE SIGNAUX ULTRA LARGE BANDE POUR LOCALISER UN NOEUD DE COMMUNICATON SANS FIL COMPRIS PAR UN CORPS**

VERFAHREN UND SYSTEM ZUR VERWENDUNG VON INDIREKTEN ULTRABREITBANDSIGNALWEGEN ZUR ORTUNG EINES DRAHTLOSEN KOMMUNIKATIONSKNOTENS AUF EINEM KÖRPER

METHOD AND SYSTEM FOR USING INDIRECT PATHS OF ULTRA WIDEBAND SIGNALS TO LOCALIZE A WIRELESS COMMUNICATION NODE ON A BODY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.09.2010 FR 1057425**

(43) Date de publication de la demande:
**24.07.2013 Bulletin 2013/30**

(73) Titulaire: **Commissariat à l'Énergie Atomique et aux Énergies Alternatives**
**75015 Paris (FR)**

(72) Inventeurs:
• **BEN HAMIDA, Elyes**
  **F-38000 Grenoble (FR)**
• **DENIS, Benoît**
  **F-38000 Grenoble (FR)**
• **OUVRY, Laurent**
  **F-38420 Le Versoud (FR)**

(74) Mandataire: **Labatte, Laurent et al**
**Marks & Clerk France**
**Immeuble Visium**
**22, avenue Aristide Briand**
**94117 Arcueil Cedex (FR)**

(56) Documents cités:
US-A1- 2002 196 187     US-A1- 2003 060 166
US-A1- 2005 179 591     US-A1- 2008 198 072

• YUNJOONG PARK ET AL: "Performance of Wireless Body Area Network over on-human-body propagation channels", SARNOFF SYMPOSIUM, 2010 IEEE, IEEE, PISCATAWAY, NJ, USA, 12 avril 2010 (2010-04-12), pages 1-4, XP031679288, ISBN: 978-1-4244-5592-8

## Description

La présente invention concerne un procédé et un système apte à exploiter des trajets indirects de signaux ultra large bande pour localiser un noeud de communication sans fil compris par un corps. Elle s'applique notamment aux réseaux corporels coopératifs mettant en oeuvre plusieurs noeuds sans fils aptes à communiquer entre eux.

Avec les récentes avancées technologiques en matière d'intégration et de miniaturisation, et grâce au développement de technologies de communication sans fil bas débit et très basse consommation, un nouveau champ applicatif a émergé sous le nom de réseaux corporels sans fils ou BAN, acronyme anglo-saxon pour « Body Area Networks ». Par la suite les termes de « réseau corporel » et de « BAN » seront employés indifféremment l'un pour l'autre. Dans ce type d'application, des éléments d'émission et/ou de réception sans fil ont vocation à former un réseau sur ou à grande proximité d'un corps humain. Des applications connues de ces réseaux sont notamment le « terminal éclaté » (comportant écrans, claviers, et oreillettes non co-localisés), les équipements sportifs (cardio-fréquencemètre, montre, podomètre sur une chaussure) ou les équipements médicaux (monitoring nomade de l'activité cardiaque, cérébrale et musculaire, par exemple). Les besoins en réseaux corporels sans fil intelligents, autonomes, et capables de répondre aux besoins d'applications émergentes, dans des domaines aussi variés que la sécurité, la santé, le sport et le divertissement de masse croissent donc régulièrement.

En outre, la localisation des noeuds sans fil constituant un BAN trouve un intérêt dans de nombreuses applications telles que :

- la navigation de groupes de personnes mobiles en environnements intérieurs et les services géolocalisés ;
- la capture de mouvement, par exemple, pour le suivi du geste sportif ou pour des applications de divertissement et de jeux ;
- la détection de posture, par exemple, pour la rééducation, le suivi de personnes vulnérables ou âgées, et la surveillance de personnes évoluant dans un environnement sinistré, par exemples des pompiers opérant à l'intérieur d'un bâtiment en feu.

Aussi, il est souhaité d'améliorer la précision de positionnement des noeuds attachés à un corps mobile et/ou limiter le nombre de liens radio nécessaires dans un contexte de localisation coopérative au sein de groupes de réseaux corporels sans fil mobiles.

La problématique de la localisation et du positionnement a déjà été étudiée assez largement, notamment dans le contexte des réseaux ad hoc et de capteurs. On pourra notamment, à ce propos, consulter la publication des auteurs N. Patwari, J.N. Ash, S. Kyperountas, A.O. Hero, R.L. Moses, et N.S. Correal, "Locating the nodes: coopérative localization in wireless sensor networks," Signal Processing Magazine, IEEE, vol. 22, juillet 2005, pp. 54-69, document référencé [DOC 1] par la suite. Le problème de la localisation dans le cadre des réseaux corporels sans fil, réseaux couramment désignés par le sigle WBANs a été exploré mais les solutions proposées n'exploitent pas les caractéristiques du canal multi-trajets, et se limitent notamment à des métriques basiques pour l'estimation des distances entre les noeuds. On peut citer, notamment pour les techniques exploitant la métrique RSSI (pour « Receive Signal Strength Indicator » en anglais), les publications suivantes :

- C.P. Figueiredo, N.S. Dias, et P.M. Mendes, "3D localization for biomedical wireless sensor networks using a microantenna," Wireless Technology, 2008. EuWiT 2008. European Conference on, 2008, pp. 45-48, document référencé [DOC 2] par la suite;
- C. Guo, J. Wang, R.V. Prasad, et M. Jacobsson, "Improving the Accuracy of Person Localization with Body Area Sensor Networks: An Experimental Study," Consumer Communications and Networking Conference, 2009. CCNC 2009. 6th IEEE, 2009, pp. 1-5, document référencé [DOC 3] par la suite ;
- H. Ren, M.Q. Meng, et L. Xu, "Indoor Patient Position Estimation Using Particle Filtering and Wireless Body Area Networks," Engineering in Medicine and Biology Society, 2007. EMBS 2007. 29th Annual International Conference of the IEEE, 2007, pp. 2277-2280, document référencé [DOC 4] par la suite ;
- Choi, "System, Apparatus and Method for Keeping a Person Under Surveillance", demande de brevet internationale référencée sous le numéro de publication WO 2008/143379 A1, du 27 novembre 2008, document référencé [DOC 14] par la suite ;
- H. Baldus et Al., "Method for Positioning of Wireless Medical Devices with Short-Range Radio Frequency Technology", demande de brevet internationale référencée sous le numéro de publication WO 2005/096568 A1, du 11 mars 2005, document référencé [DOC 15] par la suite ;
- B. E. Funk et Al., "Method and System for Locating and Monitoring First Responders", demande de brevet américaine référencée sous le numéro de publication US 2008/0077326 A1, du 27 mars 2008, document référencé [DOC 16] par la suite ;

et pour les techniques exploitant la métrique DOA :

- F. Chiti, R. Fantacci, F. Archetti, E. Messina, et D. Toscani, "An Integrated Communications Framework for Context Aware Continuous Monitoring with Body Sensor Networks", IEEE Journal on Selected Areas in Communications, Vol. 27, No. 4, mai 2009, document référencé [DOC 7] par la suite;

une technique exploitant la métrique TOA ou TDOA à partir des trajets directs :

- Y. Caritu et Al., "Motion Capture Device and Associated Method", demande de brevet internationale référencée sous le numéro de publication WO 2007/093641 A2, 2007, document référencé [DOC 18] par la suite ;

et une technique exploitant des ultra-sons :

- G. Vannucci et Al., "System and Method for Motion Capture in Natural Environments", demande de brevet américaine référencée sous le numéro de publication US 2008/0223131 A1, du 18 septembre 2008, document référencé [DOC 17] par la suite.

En radio, la métrique qui est classiquement exploitée est le temps de vol, dont on tire directement une distance en connaissant la célérité des ondes électromagnétiques dans l'air. En conditions réelles, le temps de vol mesuré est affecté par une incertitude liée à plusieurs phénomènes tels que le bruit d'agitation thermique, les phénomènes multi-trajets et les situations d'obstruction des liens radios, ces situations étant également qualifiées de situation NLOS, pour « Non-Line-Of-Sight » en langue anglaise.

C'est notamment pour répondre à ces contraintes que la technologie UWB (« Ultra Wide Band » ou ultra large bande) a été étudiée dans un contexte de localisation, cette technologie bénéficiant de propriétés intrinsèques de bonne résolution temporelle que ce soit dans un fonctionnement de type RADAR ou de type coopératif (comme dans un contexte de communications numériques classique). Cette technologie, qui s'est imposée comme couche physique alternative pour des réseaux de capteurs sans fil ou WSN (pour Wireless Sensor Networks) à bas débit ou LDR (pour Low Data Rate) et à faible consommation électrique ou ULP (pour Ultra Low Power) repose sur l'émission de signaux dont le rapport entre la largeur de la bande à -10 dB et la fréquence centrale est supérieur à 20%, ou disposant d'une bande absolue supérieure à 500MHz. En particulier, ces systèmes de communication ultra large bande impulsionnels prévoient la transmission de trains codés et/ou modulés d'impulsions brèves. Dans le domaine temporel, le fort pouvoir séparateur de tels signaux et des systèmes qui leurs sont associés, directement imputable à la largeur de la bande spectrale occupée, autorise la résolution de profils multi-trajets denses en réception.

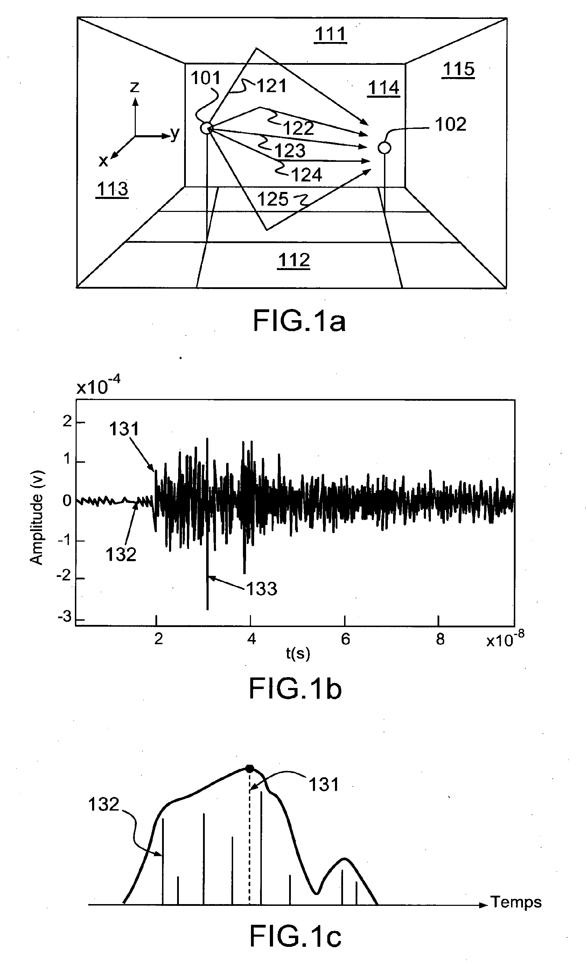

La figure 1a, issue de la publication W. Yang et Al., "Time-Domain Investigating Path Loss Characteristics of UWB Signals in Indoor line-of-sight Environment", The 2nd IEEE International Conference on Wireless Communications, Networking and Mobile Computing, 2006, illustre un scénario de transmission radio UWB entre un émetteur 101 et un récepteur 102 en environnement intérieur, en l'espèce dans une pièce avec plafond 111, plancher 112, et murs 113, 114, 115. Au cours de sa propagation, l'onde radio subit différents types d'interactions électromagnétiques avec l'environnement, parmi lesquels des réflexions sur des surfaces réfléchissantes et/ou des diffractions, sur des arêtes. Plusieurs copies 121, 122, 123, 124, 125 du signal transmis sont alors reçues au niveau du récepteur 102, avec des caractéristiques temporelles et spatiales différentes. Ce phénomène est plus connu sous le nom de propagation multi-trajets. L'un des intérêts des systèmes UWB est que la bonne résolution temporelle du récepteur permet de distinguer les différentes copies d'un signal reçu, et de pouvoir restituer une image suffisamment précise du canal de propagation multi-trajets (image appelée aussi réponse impulsionnelle du canal ou CIR pour « Channel Impulse Response »).

La figure 1b, issue de la publication W. W. Ji et Al., "A Fuzzy Logic-Based Ranging Technique for UWB Radio Link", IEEE WICOM 2006, illustre un exemple de réponse impulsionnelle d'un canal de propagation multi-trajets. En ordonnée est représentée l'amplitude de la réponse et en abscisse le temps. La composante estimée et correspondant au présumé trajet direct 131 ne correspond pas forcément au premier trajet réel effectivement reçu 132 - car une impulsion correspondant à une occurrence de bruit et dont l'amplitude dépasse le seuil de détection peut être confondue avec la réception d'un trajet d'onde - et/ou ne correspond pas non plus nécessairement au trajet ayant la plus forte amplitude 133. C'est notamment le cas lorsque les liens de communication radio entre les noeuds d'un BAN sont en situation d'obstruction des liens de communications (NLOS), comme le montre la figure 1c.

Contrairement à un contexte de transmission de données par exemple, où il est fréquent que le récepteur cherche à se synchroniser sur le trajet (ou un groupe de trajets) le (ou les) plus fort(s), les applications de localisation imposent que le récepteur détermine très précisément la composante correspondant à la propagation du premier trajet reçu, présumé celle du trajet direct, afin de mesurer de manière précise le temps d'arrivée, et d'en déduire ainsi la distance entre l'émetteur et le récepteur. On peut pour ce qui concerne l'étude des caractéristiques du canal UWB, citer notamment les publications suivantes :

- T. Zasowski et Al., "Propagation Effects in UWB Body Area Networks", IEEE ICU 2005, [DOC 19];
- R. Fort et Al., "Ultra-Wideband Channel Model for Communication Around the Human Body", IEEE Journal on Selected Areas in Communications, Vol. 24, N.4, pp. 927-933, 2006, [DOC 20] ;
- Fort, et Al., "Ultra Wide-band Body Area Channel Model", IEEE ICC 2005, pp. 2840-2844, Vol. 4, [DOC 29].

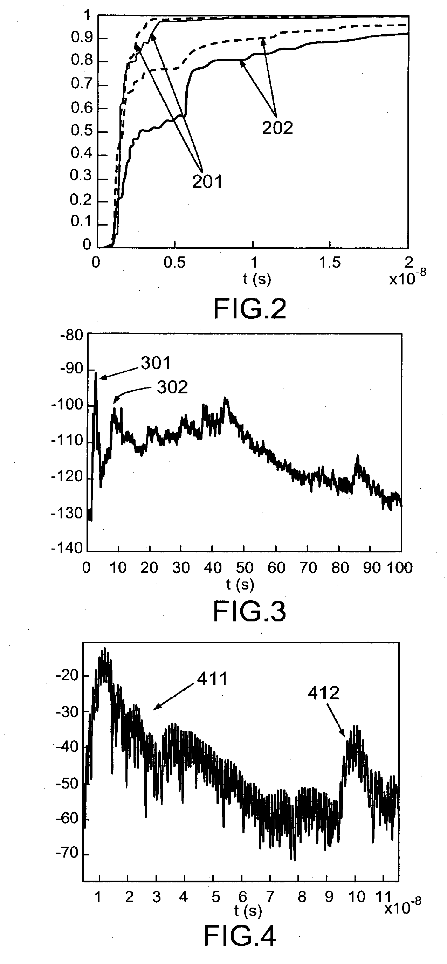

La figure 2 illustre, par un premier exemple tiré du document DOC 19 cité plus haut, la contribution énergétique relative à deux groupes de trajets différents 201, 202 pour un environnement de type « bureau ». Le premier groupe 201, qui arrive en moins de 1 ns au noeud récepteur, peut être associé au trajet direct. Le deuxième groupe 202, apparaissant au bout de 6 ns, est quant à lui associé à un trajet réfléchi sur un bureau situé à proximité. Le reste de l'énergie arrive ensuite de façon plus diffuse.

La figure 3 illustre, par un deuxième exemple tiré du document DOC 20 cité plus haut, la richesse d'un profil multi-trajets en réception, et donc de l'information que l'on peut tirer de l'environnement, et en particulier des réflexions simples, réflexions qui donnent lieu à des échos remarquables et significatifs. A titre d'exemple, après le premier trajet « direct » 301 survenu au bout de 2-3 ns, on note assez distinctement vers 7 à 8 ns une première réflexion forte 302 correspondant à une réflexion sur le sol (dans l'exemple avec une distance parcourue équivalente proche de 2.5m).

Dans un dernier exemple illustré en figure 4 et tiré du document DOC 29 cité plus haut, la réponse impulsionnelle d'un canal de propagation multi-trajets est représentée pour une transmission de signal entre un noeud placé à l'avant d'un corps humain et un noeud situé sur une ancre fixe à proximité du corps. Un premier groupe de signaux 411 reçus correspond à la diffraction de l'onde autour du torse du corps et un deuxième groupe 412 est dû à la réflexion sur le sol.

Les solutions de localisation de réseaux corporels sans fil proposées dans l'art antérieur n'exploitent pas la technologie de communication ultra-large bande ainsi que la diversité du profil multi-trajets reçu (cf. les publications référencées plus haut dans ce préambule DOC 2 à DOC 17).

Cependant, certaines techniques ont été proposées pour la localisation et/ou la cartographie en se basant sur des systèmes UWB, soit en exploitant uniquement les informations liées aux trajets directs, soit en prenant en compte à la fois les trajets directs et un ensemble de trajets secondaires.

Les techniques exploitant uniquement les informations liées aux trajets directs sont d'abord présentées. Une technique présentée dans (cf. DOC 18 cité plus haut), porte sur un système autonome de détermination d'informations représentatives du mouvement d'une chaîne articulée comprenant au moins deux éléments solides et au moins une articulation reliant lesdits deux éléments. Toutefois, cette technique n'exploite pas la diversité multi-trajets du canal UWB et se base uniquement sur l'estimation des trajets directs entre noeuds de communication. De plus, chaque élément mobile est constitué d'un ensemble de noeuds qui sont placés à des endroits bien spécifiques pour déterminer le mouvement d'articulations.

Une autre méthode, décrite dans la demande de brevet internationale référencée sous le numéro de publication WO 2007/067821 A2, du 14 juin 2007, [DOC 22], est une technique de positionnement s'appuyant sur la technologie radio UWB et la métrique du temps d'arrivée (ou TOA pour Time-Of-Flight en anglais). L'invention met en oeuvre de multiples mesures de distances en temps et en espace afin d'améliorer la précision de localisation. Cependant, cette méthode n'exploite pas la diversité multi-trajets du canal UWB et se base uniquement sur l'estimation des trajets directs. De plus, chaque élément (ou terminal) mobile n'est porteur que d'un seul noeud de communication radio.

La technique présentée dans le brevet américain publié sous le numéro US 7,397,379 B2 du 8 juillet 2008, [DOC 23], se présente sous la forme d'un système permettant de localiser, en environnement intérieur, des personnes mobiles. Cette technique s'appuie sur la technologie radio UWB, où chaque personne est associée à un noeud radio ultra large bande permettant de réaliser des mesures de distances vis-à-vis d'ancres ou d'autres personnes à portée de communication. Toutefois, cette technique n'exploite pas les informations relatives aux trajets secondaires (ou issus de réflexions). De plus, chaque élément mobile (personne, etc.) n'est porteur que d'un seul noeud de communication radio.

Certaines techniques de localisation connues exploitent des trajets secondaires au moyen d'une approche statistique ou stochastique. On peut citer à ce propos :

- M. Najar, J. Vidal, "Kalman Tracking for Mobile Location in NLOS Situations", in Proc. IEEE PIMRC'03, vol. 3, pp. 2203-2207, Sept.2003 [DOC 36] ;
- B. Denis, L. Ouvry, B. Uguen, F. Tchoffo-Talom, "Advanced Bayesian Filtering Techniques for UWB Tracking Systems in Indoor Environments", in Proc. IEEE International Conference on Ultra-wideband, pp. 638-643, Zurich, Sept. 2005 [DOC 37].

Ces techniques exploitent l'estimation des temps d'arrivées (TOA) correspondant à des trajets secondaires (due à l'obstruction des liens radio directs en non visibilité directe ou NLOS), induisant ainsi un biais dans les mesures. Ce biais est généralement estimé sous la forme de marche aléatoire au moyen de méthodes de filtrage, afin d'améliorer la précision de la localisation.

Cependant, cette méthode de localisation n'exploite pas de relation entre les temps d'arrivées des trajets secondaires et la position des noeuds de communication. De plus, chaque élément mobile n'est porteur que d'un seul noeud de communication radio impliqué dans des mesures de distance ; autrement dit, soit l'élément mobile n'est porteur que d'un seul noeud sans fil, soit l'élément mobile est porteur de plusieurs noeuds mais un seul noeud parmi ceux-ci est impliqué dans les mesures de distance.

Certaines approches hybrides ou semi-déterministes ont également été explorées, comme par exemple celle publiée par J. Youssef, B. Denis, C. Godin, S. Lesecq, "Enhanced UWB Indoor Tracking through NLOS TOA Bias Estimation", IEEE Global Communications Conference 2008 (IEEE GLOBECOM'08), Nouvelle-Orléans, USA, novembre-décembre 2008, [DOC 43]. Celles-ci se basent, par exemple, sur une modélisation déterministe des dépendances angulaires du biais introduit par la mobilité et la présence de multi-trajets liés à la configuration de type NLOS du canal UWB. Toutefois, ces méthodes de localisation n'exploitent pas de relation entre les temps d'arrivées des trajets secondaires et la position des noeuds de communication. De plus, chaque élément mobile n'est porteur que d'un seul noeud de communication radio impliqué dans des mesures de distance.

D'autres techniques de localisation exploitent des trajets secondaires au moyen d'une approche déterministe afin d'exprimer une relation explicite entre les temps d'arrivées des trajets secondaires et la position des noeuds. Par exemple, dans :

- V. La Tosa, B. Denis, B. Uguen, "Maximum Averaged Likelihood Estimation Tree for Anchor-Less Localization Exploiting IR-UWB Multipaths", in Proc. IEEE VTC-Spring'10, Taipei, May 2010, [DOC 31] ; et
- B. Denis, V. La Tosa, B. Uguen, F. Tchoffo-Talom, "METHOD AND SYSTEM FOR AIDING ENVIRONMENTAL CHARACTERIZATION BY ULTRA-WIDEBAND RADIOFREQUENCY SIGNALS", demande de brevet internationale référencée sous le numéro de publication WO/2009/077510, Juin 2009, [DOC 33],

on exploite en partie les temps d'arrivée des trajets issus de simples réflexions sur les murs pour retrouver les dimensions de pièces et les positions relatives d'un couple de noeuds radio UWB bas débit. Une approche similaire, développée par W. Guo, N. P. Filer, "2.5D Indoor Mapping and Location Sensing using an Impulse Radio Network", in Proc. IRR Seminar on Ultra Widehand Systems, Technologies and Applications 2006, pp. 211-215, Londres, avril 2006, 0, dite de cartographie radio à l'intérieur des bâtiments (ou « indoor mapping »), prévoit le positionnement d'un noeud ou d'un couple de noeuds dans une pièce sans point de référence, c'est-à-dire sans noeud connaissant sa position a priori. Cette approche se fonde principalement sur une interprétation géométrique et déterministe des temps d'arrivée des échos significatifs obtenus en réception. Ces échos sont présumés issus d'une réflexion simple ou de multiples réflexions sur les murs. Des relations mathématiques élémentaires permettent d'établir un lien entre les motifs de temps d'arrivée obtenus et les positions relatives des noeuds dans une pièce (par exemple la position par rapport aux murs). Il est à noter que cette méthode permet le positionnement d'un noeud unique (via le sondage de son propre canal en mode mono-statique, c'est-à-dire avec un émetteur et un récepteur situés sur un même noeud et fonctionnant selon le principe du radar : le noeud émet un signal qui est rétrodiffusé par l'environnement, puis reçu par ce même noeud), ou d'une paire de noeuds (via le sondage du canal entre ces deux noeuds en mode bi-statique, c'est-à-dire par transmission d'un signal entre un émetteur et un récepteur situés sur des noeuds distants). Toutefois, cette méthode détermine un positionnement uniquement en relatif, d'un noeud unique, ou d'un couple de noeuds ; en outre, elle manque de précision. Par ailleurs, cette méthode de dispose d'aucun moyen pour borner la proximité des noeuds vis-à-vis des surfaces réfléchissantes (ce qui est différent des BAN où les noeuds sont nécessairement entre 0m et 2m du sol pour des BAN implantés sur des corps humains). De plus, chaque élément mobile n'est porteur que d'un seul noeud de communication radio.

Une autre technique, dite de régionalisation de l'espace (ou « Georegioning »), permet d'établir un positionnement grossier des noeuds à partir de l'exploitation de l'ensemble du profil multi-trajets reçu. Cette technique a notamment été développée dans les publications suivantes :

- F. Althaus, F. Troesch and A. Wittneben, "UWB Geo-Regioning in Rich Multipath Environment", IEEE 2005, [DOC 38] ;
- F. Althaus, F. Troesch, A. Wittneben, "UWB Geo-Regioning in Rich Multipath Environment", VTC fall 2005, [DOC 39] ;
- Frank Althaus, Florian Troesch and Armin Wittneben, Geo-Regioning for UWB Networks, IST FA, [DOC 40] ;
- C. Steiner, F. Althaus, A. Wittneben, "On the Performance of UWB Geo-Regioning", SPAWC 2006, [DOC 41] ;

Par exemple, au sein d'un réseau UWB asynchrone, pour une position donnée du noeud émetteur et différentes positions du récepteur, on collecte dans un premier temps, les profils de puissance reçue en fonction du temps, ces profils étant parfois désignés par le sigle PDP pour « Power Delay Profile » en langue anglaise. La moyenne d'un sous-ensemble des mesures recueillies pour une même région de l'espace (ou APDP pour « Average Power Delay Profile » en langue anglaise) est alors associée à cette même région en tant que signature UWB radio. Cette première phase constitue une phase d'apprentissage. Dans un deuxième temps, pour le positionnement grossier d'un noeud au sein dans le réseau, on confronte chaque nouvelle mesure de PDP au niveau du récepteur à la moyenne APDP obtenue pour chaque région, et l'on prend une décision quant à l'appartenance géographique du noeud. La règle de décision, telle qu'elle est présentée dans le document DOC 38 cité plus haut, se fonde sur la maximisation de la vraisemblance de la nouvelle observation conditionnée au profil moyen attendu pour chaque région (ML pour « Maximum Likelihood » en langue anglaise). Toutefois, cette méthode requiert une étape de calibration ou d'apprentissage le plus souvent nécessitant une campagne intensive de mesures. En outre, le positionnement est délibérément imprécis, car un noeud est positionné comme appartenant à une certaine région de l'espace.

Enfin, d'autres techniques de reconnaissance d'empreintes radio ou de motifs, appelées également « fingerprinting » ou « pattern recognition », permettent également de tirer profit de l'intégralité du profil multi-trajets reçu. Ces techniques confrontent des mesures courantes, dérivées de l'observation des signaux UWB reçus et réalisées au gré du déplacement d'un noeud à positionner, avec des mesures ou des simulations réalisées préalablement. Ces dernières sont constitutives d'une base de données, pour lesquelles une correspondance est assurée avec les coordonnées exactes des noeuds impliqués dans les liaisons radio. Par exemple, dans la technique publiée par B. Denis, "Exploitation des Capacités de Radiolocalisation des Transmissions Ultra-Large Bande dans les Réseaux Sans-fil", Thèse de Doctorat, Chapitre 4, Section 4.4 « Positionnement, résolution ULB, et diversité temporelle - Application à la reconnaissance d'empreintes ULB en milieu indoor », pages 163-180, Institut National des Sciences Appliquées (INSA) de Rennes n° d'ordre D05-18, Rennes, décembre 2005, document référencé [DOC 42] par la suite, on préconise d'exploiter directement le résultat de la phase d'estimation de canal comme signature radio (par exemple les temps d'arrivée des trajets détectés les plus significatifs), à des fins de positionnement. Toutefois, cette méthode nécessite une étape d'apprentissage :

- soit à partir d'une campagne de mesures très importante car réalisée à différentes positions géographiques avec un pas spatial très fin ;
- ou alors à partir d'un outil de simulation performant ; mais dans ce cas, il s'avère difficile de prédire des formes d'ondes avec réalisme.

La technique présentée par J. M. Elwell et Al., "Systems and Method for Positioning using Multipath Signals", dans la demande de brevet américaine US 2008/0198072 A1 du 21 août 2008, document référencé [DOC 21] par la suite, est une méthode de positionnement et de suivi d'objets mobiles en environnement intérieur, similaire aux techniques de fingerprinting précitées. Cette méthode de localisation exploite les informations issues du canal multi-trajets UWB, à savoir des mesures des trajets directs et secondaires. Le positionnement initial d'un élément mobile est obtenu, par exemple, en utilisant un terminal de positionnement par satellite. Cette position initiale est ensuite associée à un profil multi-trajets reçu (uniquement grâce à un filtre) afin de coupler cette position à une configuration initiale, autrement dit une signature, du canal multi-trajets UWB. Par la suite, même si l'un ou la totalité des trajets directs sont perdus (par exemple en condition d'obstruction des liens radio (NLOS), le filtre ainsi construit permet de maintenir une estimation de la position de l'élément mobile à partir du profil multi-trajets reçu.

Toutefois, cette méthode nécessite une étape initiale où l'élément mobile détermine sa position de manière précise (par GPS). De plus, chaque élément mobile n'est constitué que d'un seul noeud sans fil.

Toutefois, cette méthode de localisation n'exploite pas de relations géométriques entre un ou plusieurs des trajets secondaires reçus et la position d'un ou de plusieurs noeuds attachés à l'élément mobile (par exemple, les trajets issus de réflexions sur le sol, sur le mur ou le plafond). En outre, la méthode de localisation n'exploite pas le chemin liée au trajet réfléchi sur le sol pour le positionnement relatif ou absolu et/ou le suivi de la position d'un noeud sans fil. De plus, cette méthode de localisation ne considère que des éléments ou terminaux mobiles porteurs d'un seul noeud radio.

Un but de l'invention est de mieux exploiter la diversité multi-trajets UWB, en particulier la présence de composantes fortes et reproductibles temporellement et spatialement, par exemple issus de réflexion sur le sol, mur, plafond, pour améliorer la localisation de noeuds compris par un ou plusieurs réseaux corporels sans fil. A cet effet, l'invention a pour objet un procédé de localisation d'un premier noeud de communication sans fil compris par un corps mobile, ledit premier noeud étant à portée de transmission d'au moins un deuxième noeud également compris par ledit corps mobile, lesdits noeuds étant aptes à émettre et/ou recevoir des signaux radiofréquence, ledit procédé étant caractérisé en ce qu'il comprend au moins les étapes suivantes :

- ◦ effectuer au moins une mesure de temps de vol d'un trajet indirect de signal ultra large bande transmis entre le premier noeud et le deuxième noeud, ledit trajet étant issu d'une unique réflexion sur une surface externe au dit corps, entre le premier noeud et le deuxième noeud ;

- exploiter ladite mesure de temps de vol pour localiser le premier noeud au moins par rapport au deuxième noeud.

Le procédé selon l'invention permet, pour un ou plusieurs liens radio entre noeuds appartenant à un ou plusieurs réseaux corporels sans-fil coopératifs, d'estimer, en complément ou en substitution du temps de vol associé au trajet direct entre les noeuds impliqués dans ces liens radio, les temps de vol de certains trajets indirects, identifiés comme issus de simples réflexions reproductibles en temps et en espace.

Le procédé selon l'invention exploite, à la fois des trajets directs, lorsqu'ils sont disponibles, et des trajets issus de réflexions simples et reproductibles en temps et en espace (par exemple des réflexions sur le sol ou un plafond) pour le positionnement, en absolu ou en relatif, de noeuds portés par des corps, organiques ou inorganiques, mobiles ou immobiles. Il est à noter que la présence d'un trajet direct n'est pas nécessaire à l'exécution du procédé selon l'invention.

Le procédé concerne notamment tout type d'application mettant en jeu un réseau corporel sans fil capable de tirer partie des communications radio pour estimer des mesures de distance entre des noeuds communicants et, in fine, calculer la position, relative ou absolue, de ces noeuds.

Le procédé selon l'invention utilise des transmissions radiofréquences basées sur la technologie Ultra Large Bande impulsionnelle ou IR-UWB (pour « Impulse Radio - Ultra Wide Band » en langue anglaise). Il exploite les caractéristiques du canal Ultra Large Bande (UWB) pour mesurer précisément des temps de propagation entre deux ou plusieurs noeuds physiquement attachés à un corps ou à forte proximité de celui-ci, ou éventuellement entre un noeud sur le corps et un noeud situé dans l'environnement proche, afin d'obtenir des données de position complètes ou partielles de ces noeuds. Les données de position peuvent être obtenues, soit conjointement à une transmission numérique sans-fil conventionnelle, a priori bas débit et s'appuyant sur cette même couche physique UWB ; ou soit en s'appuyant sur une couche physique UWB dédiée et où les transmissions numériques sont réalisées au moyen d'une autre technologie radio (par exemple en bande étroite).

Contrairement aux techniques utilisées dans l'art antérieur dans le contexte de la localisation, l'auto-organisation ou la capture de mouvement de réseaux corporels sans fil, le procédé selon l'invention exploite les caractéristiques du canal multi-trajets UWB, à savoir la présence de trajets issus de réflexions simples et reproductibles temporellement et spatialement.

Le procédé selon l'invention concerne de multiples applications. Les mesures de distance entre des noeuds situés sur un corps peuvent être utilisées pour positionner partiellement ou complètement, en relatif ou en absolu les dits noeuds sur le corps ou dans son environnement proche.

Avantageusement, des hypothèses sur les positions possibles des noeuds sur le corps sont effectuées a priori (par exemple, en considérant un ensemble discret de positions possibles). Conformément à l'invention, des hypothèses liées à la mécanique du corps sont considérées : par exemple : la main étant au bout du bras, cela contraint sa distance à la tête. En outre, une phase d'apprentissage peut être exécutée sur des mouvements connus à l'avance et une analyse dynamique visant à corréler les signaux avec des empreintes types de ces mouvements peut être réalisée (par exemple, procéder à un mouvement de balancier de chaque bras, puis trois pas en avant). Le procédé selon l'invention peut ainsi permettre de découvrir automatiquement la position des noeuds sur le corps, sans avoir à la donner explicitement (par exemple, un noeud est placé au poignet par l'utilisateur, mais ce dernier ne « configure » pas ce noeud comme étant « a priori » placé au poignet). Cela simplifie la procédure dite d'association. Ces mesures peuvent également permettre :

■ d'effectuer un contrôle de l'attachement des noeuds au corps (par exemple à une personne), et de vérifier l'intégrité du réseau formé par ces noeuds. Cette vérification d'intégrité va au-delà de la détection de défaillance des noeuds qui pourrait être réalisée par des méthodes plus simples ; le procédé selon l'invention peut en effet permettre de savoir, par exemple, si les noeuds restent portés par une personne de façon adéquate (par exemple si un casque est bien sur la tête et non pas dans la main) ;
■ d'aider à la reconstruction du mouvement du corps humain ou de certains de ses membres, à l'aide de cette seule technique ou en complément de capteurs de type inertiel (cf. DOC 18)
■ de mesurer précisément la longueur d'un pas ou d'une foulée, grâce à une/des mesures entre les deux pieds, entre le bassin et un ou deux pieds ;
■ de déterminer des entrées ou des sorties de zones, lorsque participe aux mesures distances des équipements qui ne sont pas situés sur le corps (exemple : zone à risque autour d'une machine dangereuse, et vice-versa, interdiction de sortie de zone). Ce cas est particulier car faisant essentiellement intervenir un équipement extérieur.

Selon une mise en oeuvre du procédé de localisation selon l'invention, l'étape de localisation du premier noeud au moins par rapport au deuxième noeud est effectuée en exploitant conjointement ladite mesure de temps de vol du trajet indirect entre le premier noeud et le deuxième noeud, et au moins une mesure de trajet direct entre le premier noeud et un autre noeud compris par le corps mobile.

D'autres caractéristiques apparaîtront à la lecture de la description détaillée donnée à titre d'exemple et non limitative qui suit faite en regard de dessins annexés qui représentent :

- la figure 1a, un exemple de signal dans un environnement multi-trajets ; cette figure a déjà été présentée plus haut ;
- la figure 1b, une représentation dans le temps de la puissance reçue du signal de la figure 1a ; cette figure a déjà été présentée plus haut ;
- la figure 1c, une illustration des erreurs d'estimation pouvant être effectuées en situation d'obstruction des liens de communication radio ; cette figure a déjà été présentée plus haut ;
- la figure 2, une représentation de l'énergie cumulée des composantes multi-trajets du canal, en fonction du temps écoulé depuis le temps d'arrivée du premier trajet reçu, pour une propagation de signal entre deux oreilles d'un corps humain ; cette figure a déjà été présentée plus haut ;
- la figure 3, une courbe représentant le profil énergétique moyen du canal en fonction du temps, pour une propagation entre un noeud placé sur l'avant d'un corps humain et un noeud placé dans le dos ; cette figure a déjà été présentée plus haut ;

- la figure 4, l'amplitude du signal reçu en fonction du temps pour une propagation entre un équipement placé sur l'avant du corps et un équipement dans l'environnement proche ; cette figure a déjà été présentée plus haut ;
- la figure 5, un synoptique illustrant deux phases du procédé selon l'invention,
- la figure 6a, un premier mode de réalisation d'un récepteur ultra large bande mise en oeuvre par le procédé selon l'invention,
- la figure 6b, un deuxième mode de réalisation d'un récepteur ultra large bande mise en oeuvre par le procédé selon l'invention,
- la figure 6c, un troisième mode de réalisation d'un récepteur ultra large bande mise en oeuvre par le procédé selon l'invention,
- la figure 7, un exemple de trajet indirect causé par une réflexion au sol,
- les figures 8a et 8b, illustrant une première mise en oeuvre du procédé selon l'invention,
- les figures 9a et 9b, illustrant une deuxième mise en oeuvre du procédé selon l'invention,
- la figure 10, illustrant une troisième mise en oeuvre du procédé selon l'invention,
- les figures 11 a et 11 b, illustrant une quatrième mise en oeuvre du procédé selon l'invention,
- la figure 12, un premier mode de réalisation d'un système selon l'invention,
- la figure 13, un deuxième mode de réalisation d'un système selon l'invention,
- la figure 14, un troisième mode de réalisation d'un système selon l'invention.

En préambule, quelques termes et expressions utilisés par la suite sont définies. Par « noeud », on entend un objet sans fil, qui peut être un émetteur, un récepteur ou bien les deux conjointement. Cet objet sans fil peut être fixé à l'intérieur du corps mobile, par exemple sous forme d'implants, ou à sa surface par exemple en contact direct avec les membres d'une personne ou intégrés aux vêtements, de sorte que les noeuds d'un même BAN peuvent être mobiles les uns par rapport aux autres et qu'il existe des relations d'ordre bio-mécanique ou mécanique régissant la mobilité de ces noeuds, ces relations étant éventuellement mobilisables dans le cadre de l'invention.

Par « réflexion simple », on entend une réflexion unique, à l'opposé d'un signal réfléchi successivement plusieurs fois.

Par « réflexion reproductible en temps », on entend une réflexion qui, toutes choses égales par ailleurs, peut être reproduite à l'identique dans le temps, à chaque fois que l'on réémet le signal qui se réfléchit.

Par « réflexion reproductible en espace », on entend une réflexion qui peut être reproduite à l'identique dans l'espace (selon la mobilité d'élément), à chaque fois que l'on réémet un signal. Ceci est notamment le cas d'une réflexion sol ou plafond. Cette reproductibilité implique également la possibilité de borner ou de prédire l'instant (ou la période temporelle) de réception d'un trajet d'onde.

Par « algorithme de poursuite », on entend un algorithme qui permet le suivi, par exemple, d'une position (ou d'un ou plusieurs trajets, ou d'une vitesse, ou d'une accélération), au cours du temps (par exemple la localisation dynamique). Un exemple d'un tel algorithme est le filtre de Kalman.

Les exemples donnés par la suite sont illustrés avec des corps humain, mais d'autres types de corps, organiques ou inorganiques (tels des robots ou des véhicules autoguidés) pourraient être employés.

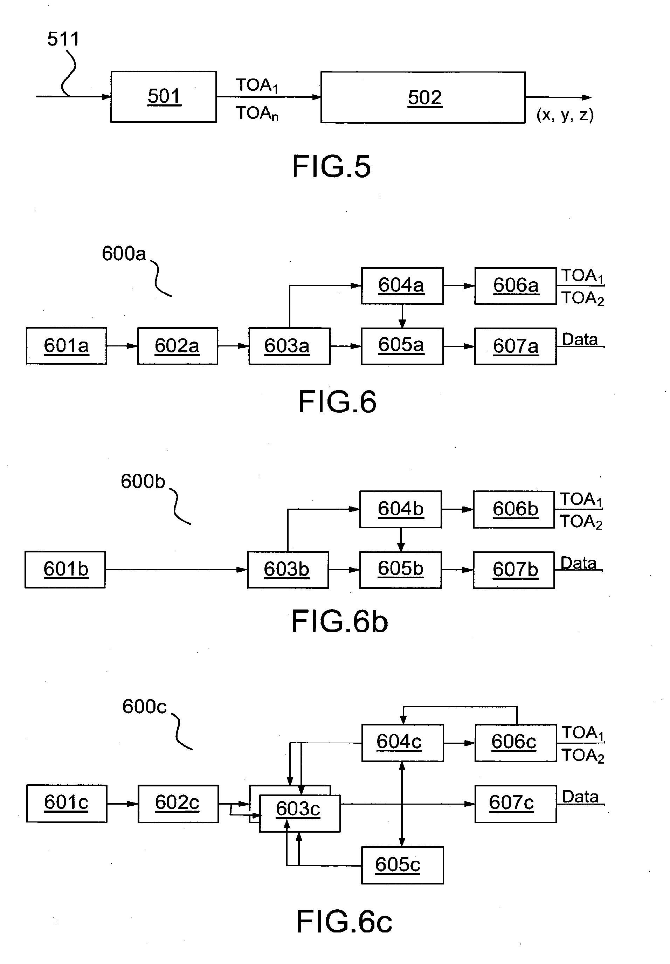

La figure 5 présente un synoptique illustrant deux phases principales 501, 502 du procédé selon l'invention.

La première phase 501 exploite un récepteur UWB apte à restituer une image du canal multi-trajets, autrement dit capable d'estimer la réponse impulsionnelle du canal de propagation des ondes, et exécute un algorithme d'estimation des temps d'arrivées d'au moins un trajet issu d'une réflexion simple et reproductible en temps et en espace, par exemple, une réflexion sur le sol, un plafond, voire sur des murs ou des meubles. La première phase 501 fournit donc, à partir des signaux radioélectriques 511 reçus par un noeud, une ou plusieurs estimations $TOA_1$, ..., $TOA_n$ de temps d'arrivée correspondant chacune à un trajet d'onde, au moins un trajet parmi ces trajets étant un trajet indirect (ou secondaire).

Ensuite, la deuxième phase 502 exploite, par un algorithme de positionnement et/ou de poursuite, les estimations $TOA_1$, ..., $TOA_n$ de temps d'arrivée sont exploitées afin de suivre ou positionner en relatif ou en absolu, le noeud que l'on cherche à localiser.

La première phase 501 est maintenant détaillée. On peut distinguer deux catégories de techniques pour la réception d'un signal UWB : la réception cohérente et la réception non-cohérente.

La technique de réception cohérente peut s'appuyer sur une corrélation glissante. Elle permet d'obtenir des performances quasi optimales. Une fenêtre d'observation très courte est positionnée en fonction de l'instant d'arrivée d'une impulsion, et un calcul du taux de corrélation entre le signal reçu et un motif (ou une estimation du signal transmis) est réalisé. Cette technique peut être, dans certains cas, assez complexe et nécessite des contraintes de synchronisation assez forte, peu adaptées à des systèmes contraints en énergie.

La technique de réception non-cohérente effectue une détection d'énergie du signal reçu, en comparant l'amplitude de l'enveloppe du signal avec un seuil donné. Au moins deux variantes de cette technique sont possibles, en fonction de l'intervalle d'intégration de la puissance du signal. Selon une première variante, l'intégration est effectuée sur la durée de l'étalement temporel des multi-trajets, aussi appelé RMS Delay Spread de la réponse impulsionnelle du canal (soit environ 20 à 80 ns en environnement intérieur). Selon une deuxième variante, l'intégration est effectuée à l'échelle de l'impulsion UWB émise (soit environ quelques ns). La première variante permet de récupérer le maximum d'énergie et est donc plus adaptée aux applications de communication, tandis que la deuxième méthode permet de mieux exploiter la grande résolution temporelle des signaux UWB et est donc plus adaptée à des applications de localisation ou d'estimation du canal.

Il est important que la reconstruction de l'image du canal de propagation multi-trajets au niveau du récepteur UWB soit suffisamment précise pour pouvoir effectuer l'analyse de la liaison radio entre le noeud émetteur et le noeud récepteur UWB. Aussi, quelle que soit la technique retenue, au terme de cette première étape de réception des signaux radioélectriques 511, le noeud récepteur UWB doit disposer en bande de base d'une image du canal multi-trajets correspondant au lien radio considéré entre deux noeuds émetteurs/récepteurs UWB, et être capable d'extraire les temps d'arrivées correspondant, respectivement, au trajet direct et aux trajets liés à des réflexions reproductibles.

La figure 6a présente un premier mode de réalisation d'un récepteur ultra large bande mise en oeuvre par le procédé selon l'invention. Le récepteur 600a comprend un premier module d'amplification 601a amplifiant le signal reçu et alimentant un module de conversion en bande de base 602a, lequel fournit le signal reçu transposé en fréquence à un convertisseur analogique-numérique 603a échantillonnant le signal à au moins la fréquence de Nyquist. Le convertisseur analogique-numérique 603a alimente un module d'estimation de la réponse impulsionnelle 604a, d'une part, et un récepteur RAKE 605a d'autre part. Le récepteur RAKE (ou récepteur à doigts) est un récepteur optimal (contenant un filtre adapté au canal) qui permet, d'une part, de contrer les effets des trajets multiples en combinant en phase plusieurs échos reçus, et d'autre part d'augmenter le rapport signal-à-bruit (SNR), améliorant ainsi la détectabilité / synchronisation / démodulation du signal. Le signal issu du récepteur RAKE est ensuite décodé 607a afin de récupérer les données utiles qui ont été transmises. Parallèlement, le convertisseur analogique-numérique 603a alimente également un module pour l'estimation de la réponse impulsionnelle du canal 604a, qui est ensuite exploitée par un module d'extraction des trajets 606a.

La figure 6b présente un deuxième mode de réalisation d'un récepteur ultra large bande mise en oeuvre par le procédé selon l'invention. Ce deuxième mode de réalisation 600b est similaire au premier mode 600a de la figure 6a, à l'exception de la fréquence d'échantillonnage, qui est plus faible afin, entre autres, de minimiser la consommation d'énergie, au détriment toutefois d'une dégradation des performances.

La figure 6c présente un troisième mode de réalisation d'un récepteur ultra large bande mise en oeuvre par le procédé selon l'invention. Le troisième mode de réalisation 600c comporte un module intégrateur 603c alimenté par un module de recherche 604c des deux trajets de tête, et un module de recherche séquentielle de synchronisation 605c. Dans ce troisième mode de réalisation, un échantillonnage du signal ultra large bande est effectué à un rythme multiple de la fréquence de répétition des impulsions (1/PRP=15.6 MHz par exemple, PRP étant la période de répétition des impulsions), avec un petit coefficient, par exemple égal à quatre. Cela veut dire que pour chaque période PRP, on pourra faire quatre corrélations. A contrario, le premier mode de réalisation de la figure 6a échantillonne à la fréquence de Nyquist (dans l'exemple, 15.6MHz * 64, soit environ 1 GHz) de façon a permettre de faire un maximum de corrélations en parallèle pour chaque période de répétition des impulsions, soit 64 dans l'exemple. Dans l'exemple, lors de la phase de synchronisation effectué par le module 605c, il faut effectuer un test pour toutes les 64 positions possibles, donc avec le troisième mode de réalisation, il faut les tester les unes après les autres ; il s'agit d'une recherche séquentielle, alors que tout peut être fait en parallèle dans le cas du premier mode de réalisation.

L'étape d'extraction 606a des temps d'arrivée, correspondant au trajet direct et à un ensemble de trajets indirects reproductibles (réflexion sol, plafond, etc.) peut être difficile, notamment dans le contexte des réseaux corporels sans fil qui se caractérisent par un taux très élevé de liens radio en situation d'obstruction, c'est à dire en situation NLOS.

Des algorithmes connus permettent d'estimer les temps d'arrivées liés aux trajets directs. On peut notamment citer l'algorithme de maximum de vraisemblance généralisé (GML) qui se base sur l'algorithme CLEAN publié dans J. Hogborn, "Aperture Synthesis with a Non-Regular Distribution of Interferometer Baselines", Astron. and Astrophys. Suppl. Ser, vol. 15, 1974.

Par ailleurs, l'extraction des trajets issus de réflexions simples et reproductibles peut être facilitée, par exemple en appliquant un fenêtrage ou une poursuite de trajet, à partir de la connaissance de la position temporelle du trajet direct (sur la base de la dernière localisation ou synchronisation disponible), et/ou d'une connaissance a priori de la géométrie de l'environnement, et/ou de contraintes géométriques et bio-mécaniques, par exemple, la disposition des noeuds émetteurs et/ou récepteurs sur un corps, ainsi que la hauteur du corps vis-à-vis du sol. Le fenêtrage consiste à ne sélectionner qu'une partie de la réponse impulsionnelle du canal. En effet, grâce à la connaissance de la hauteur du corps mobile (ou du noeud sans fil) et de la nature de la réflexion (sol, plafond, etc.), la distance maximale que peut parcourir un tel trajet réfléchi, est déterminée. Il est dès lors possible d'appliquer un fenêtrage temporel sur la réponse impulsionnelle du canal, afin d'exclure les trajets non pertinents. L'extraction des trajets secondaires issus de réflexions simples peut également être réalisée grâce à un algorithme de poursuite, qui à partir de la connaissance des positions temporelles précédentes de ces trajets (estimées précédemment), estime les positions actuelles de ces trajets.

Il est à noter que durant l'étape d'extraction des trajets, on peut également chercher à tirer profit de métriques radios, comme par exemple le « RMS delay spread », afin de faciliter la discrimination entre les situations LOS et NLOS, et/ou pour assister et améliorer la précision des algorithmes de positionnement. Cette métrique du « Delay Spread » permet d'apprécier l'étalement temporel significatif, ou dispersion des retards, liés aux multi-trajets. Cet étalement tend à augmenter en condition d'obstruction des liens radio, ou NLOS, et constitue un outil de décision de l'état du canal.

La deuxième phase 502 est maintenant détaillée. Cette phase 502 exploite les mesures des temps d'arrivées, $TOA_1$ ... $TOA_n$, issues de la première phase 501 et correspondant au trajet direct et à un ensemble de réflexions simples et reproductibles en temps et en espace, pour positionner ou suivre les noeuds d'un ou plusieurs réseaux corporels mobiles.

A titre illustratif et non limitatif, les temps d'arrivées considérés par la suite sont ceux liés aux trajets directs et aux trajets issus des réflexions sur le sol, même si d'autres types de trajets peuvent être pris en compte comme par exemple des réflexions sur un plafond ou, en supposant que les noeuds disposent d'une pré-connaissance de l'environnement, des réflexions vis-à-vis d'autres obstacles tels des murs ou des objets environnants.

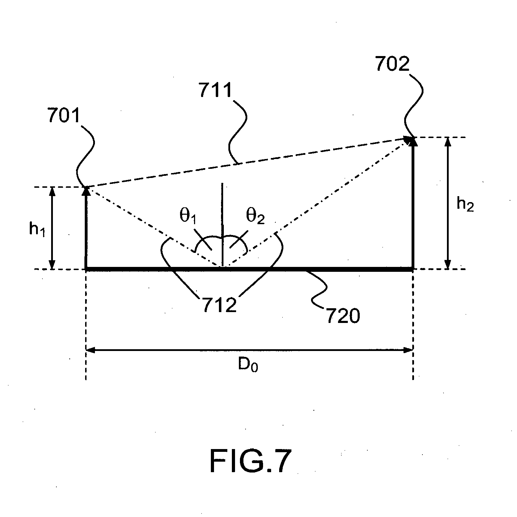

La figure 7 illustre un exemple de trajet indirect causé par une réflexion au sol. Un signal radioélectrique est transmis par un noeud émetteur 701 vers un noeud récepteur 702. Un premier trajet 711 entre les deux noeuds 701, 702 est le trajet direct, autrement dit, un segment de droite reliant les deux noeuds. Un deuxième trajet 712, représenté sur la figure 7 par une alternance de points et de lignes, est un trajet indirect issu d'une réflexion sur le sol 720. Pour rappel, l'angle d'incidence θ1 du deuxième trajet 712 sur le sol est égal à l'angle de réflexion θ2.

Grâce à l'utilisation d'un récepteur UWB, tel que décrit plus haut, le noeud récepteur 702 est capable d'estimer au moins une partie de la réponse impulsionnelle du canal et d'extraire les temps d'arrivées, $TOA_1$ et $TOA_2$, correspondant respectivement au trajet direct 711 et au trajet indirect 712.

En considérant des coordonnées exprimées dans un repère 3D, et en supposant que les noeuds sont synchronisés, la relation entre les temps d'arrivées, et les distances et coordonnées des noeuds peut être exprimée comme suit :

$$D_1 = \sqrt{D_O{}^2 + (h_2 - h_1)^2} \approx TOA_1 \times c$$

$$R_1 = \sqrt{D_O{}^2 + (h_2 + h_1)^2} \approx TOA_2 \times c$$

où :

- $D_0$ représente la distance au sol entre l'émetteur 701 et le récepteur 702 ;
- $D_1$ représente la longueur du trajet direct 711 ;
- $R_1$ représente la longueur du trajet indirect 712 ;
- $c$ représente la célérité des ondes électromagnétiques ;
- $TOA_1$ et $TOA_2$ sont les temps d'arrivées mesurés qui correspondent aux temps de vol des signaux qui se propagent le long du premier trajet 711 et du deuxième trajet 712.
- $h_1$ et $h_2$ sont les hauteurs respectives auxquelles sont situés l'émetteur 701 et le récepteur 702.

Cet exemple peut être étendu au cas des systèmes asynchrones, auquel cas les temps de vol sont estimés au moyen d'un protocole de type N-Way ranging (tel que publié, par exemple dans D. Macagnano and Al., "MAC Performances for Localization and Tracking in Wireless Sensor Networks", In Proceedings of the 4th Workshop on Positioning, Navigation and Communication (WPNC), Mars 2007), en plus de l'estimation des temps d'arrivées.

A ce stade, le noeud récepteur 702 peut exploiter ces deux mesures de distance pour affiner le calcul de sa position absolue ou relative vis-à-vis du noeud émetteur 701.

L'algorithme de positionnement et/ou de suivi prend en entrée les différentes mesures de distance et métriques associées, et fournit en sortie les informations nécessaires (positions relatives, positions absolues, par exemple) pour une application donnée (navigation, positionnement, capture de mouvement, par exemple). Plusieurs algorithmes peuvent être employés pour effectuer le positionnement ou le suivi du noeud récepteur 702, notamment les algorithmes d'optimisation non linéaire, la méthode des moindres carrés linéarisée, les méthodes de tri-latération, les filtres de Kalman (dont les Filtres de Kalman Etendus, ou EKF) et particulaires.

Plusieurs mises en oeuvres du procédé selon l'invention sont maintenant illustrées de manière ni restrictive ni exhaustive, afin de mieux faire apparaître l'apport de l'invention. Par souci de simplification, on considérera par la suite que les trajets indirects sont dus à des réflexions sur le sol.

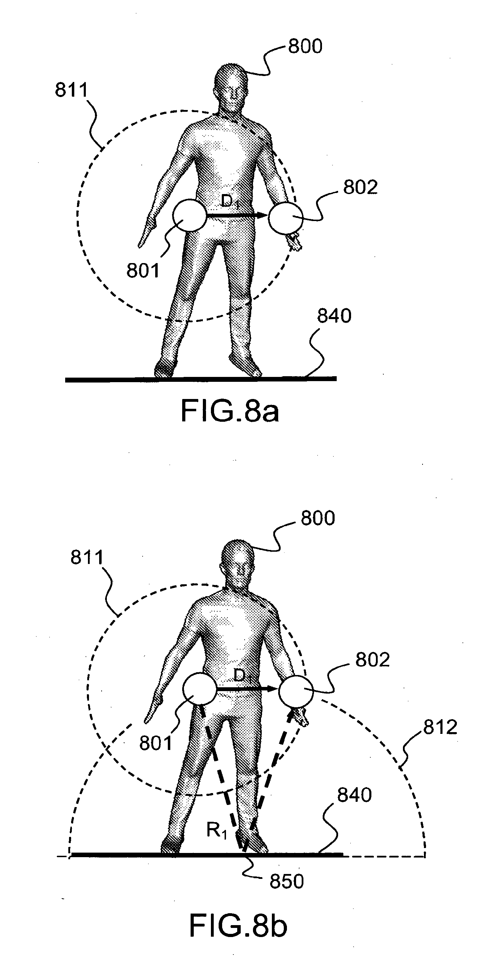

Les figures 8a et 8b illustrent une première mise en oeuvre du procédé selon l'invention dans laquelle le positionnement d'un deuxième noeud 802 attaché à un corps est effectué vis-à-vis d'un premier noeud 801 attaché au même corps.

Dans l'exemple, les noeuds 801, 802 sont attachés à un corps humain 800 en mouvement. La position du premier noeud 801 est supposée connue dans un référentiel local au corps ou vis-à-vis d'un référentiel arbitraire existant. Le premier noeud 801 transmet un signal vers le deuxième noeud 802. Le deuxième noeud 802 exécute le procédé selon l'invention en estimant, d'une part, la longueur $D_1$ du trajet direct et, d'autre part, la longueur $R_1$ du trajet indirect résultant d'une réflexion sur le sol 840.

Dans l'exemple, la mesure de longueur du trajet indirect $R_1$ correspondant à la réflexion sur le sol 840 correspond environ au double de la hauteur du premier noeud 801. Il peut être alors déduit que le deuxième noeud 802 se situe à proximité du plan horizontal passant par le premier noeud 801. De plus, comme la mesure de longueur $D_1$ du trajet direct est supérieure à la largeur de la hanche du corps, il peut être déduit que le deuxième noeud 802 est situé au niveau du poignet à la droite du premier noeud 801.

Ainsi, comme l'illustre la figure 8a, la seule mesure de longueur $D_1$ du trajet direct n'aurait pas permis de positionner le deuxième noeud 802, puisque le deuxième noeud 802 aurait pu se situer sur la surface d'une sphère 811 de rayon $D_1$ centrée sur le premier noeud 801, représentée en pointillés sur la figure 8a. Grâce à la prise en compte, pour le même lien radio, d'une mesure supplémentaire de temps de vol due à la réflexion sur le sol, le deuxième noeud 802 dispose de davantage d'informations qu'il peut exploiter pour déduire sa position relative ou absolue, grâce à des relations et des contraintes géométriques et/ou biomécaniques. Comme illustré dans la figure 8b, le deuxième noeud 802 se situe à l'intersection d'une première sphère 811 de rayon $D_1$ centrée sur le premier noeud 801 avec une deuxième sphère 812 centrée sur le point de réflexion 850 sur le sol 840. Il est évidemment à noter que plus le nombre de mesures de temps de vol de trajets (direct et indirects) est élevé, plus un positionnement précis du deuxième noeud 802 est favorisé.

Il est à noter que selon une autre mise en oeuvre du procédé selon l'invention, c'est le deuxième noeud 802 qui transmet un signal vers le premier noeud 801, le temps de vol associé au trajet pouvant alors être retransmis vers le deuxième noeud 802 par une autre liaison de communication.

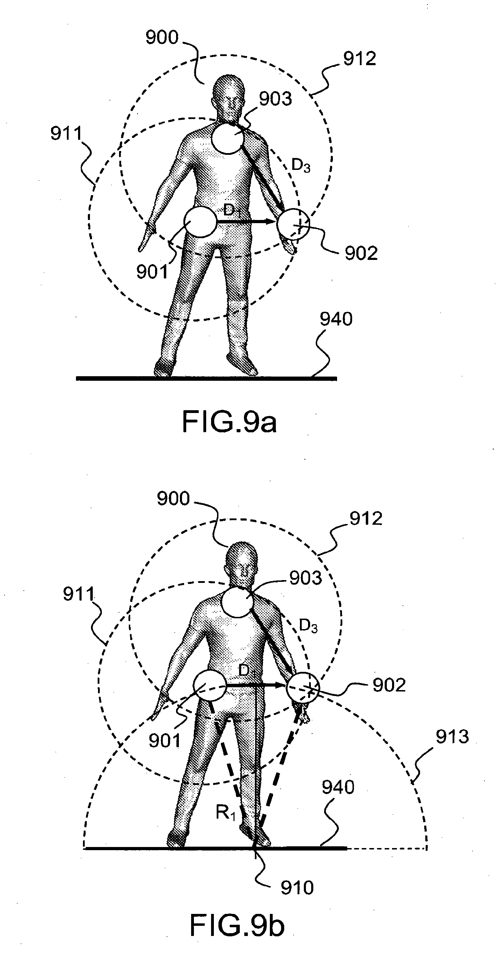

Les figures 9a et 9b illustrent une deuxième mise en oeuvre du procédé selon l'invention. Dans l'exemple, trois noeuds 901, 902, 903 sont attachés à un corps humain 900. Le premier noeud 901 et le troisième noeud 903 ont des positions déjà connues. Le procédé est utilisé pour positionner le deuxième noeud 902 par rapport aux premier et troisième noeuds 901, 903.

Le premier noeud 901 transmet un signal vers le deuxième noeud 902 et le troisième noeud 903 transmet également un signal vers le deuxième noeud 902. Le deuxième noeud 902 exécute ensuite le procédé selon l'invention en estimant la longueur $D_1$ du trajet direct entre le premier noeud 901 et le deuxième noeud 902, la longueur $R_1$ du trajet indirect entre le, premier noeud 901 et le deuxième noeud 902, résultant d'une réflexion sur le sol 940, et la longueur $D_3$ du trajet direct entre le troisième noeud et le deuxième noeud 902.

Comme illustré en figure 9a, les seules mesures de longueur de trajets directs $D_1$ et $D_3$ ne permettent pas d'estimer précisément la position du deuxième noeud 902, car certaines ambiguïtés géométriques persistent. Dans l'exemple de la figure 9a, on peut positionner le deuxième noeud 902 au niveau du cercle marquant l'intersection de deux sphères, la première sphère étant de rayon $D_1$ et centrée sur le premier noeud 901, la deuxième sphère étant de rayon $D_3$ et centrée sur le troisième noeud 903. Grâce à la mesure supplémentaire de la longueur $R_1$ du trajet indirect, le deuxième noeud 902 peut être positionné plus précisément en levant certaines ambiguïtés géométriques, puisqu'une nouvelle contrainte de positionnement est ajoutée sous la forme d'une surface d'une troisième sphère centrée sur le point de réflexion 950 sur le sol.

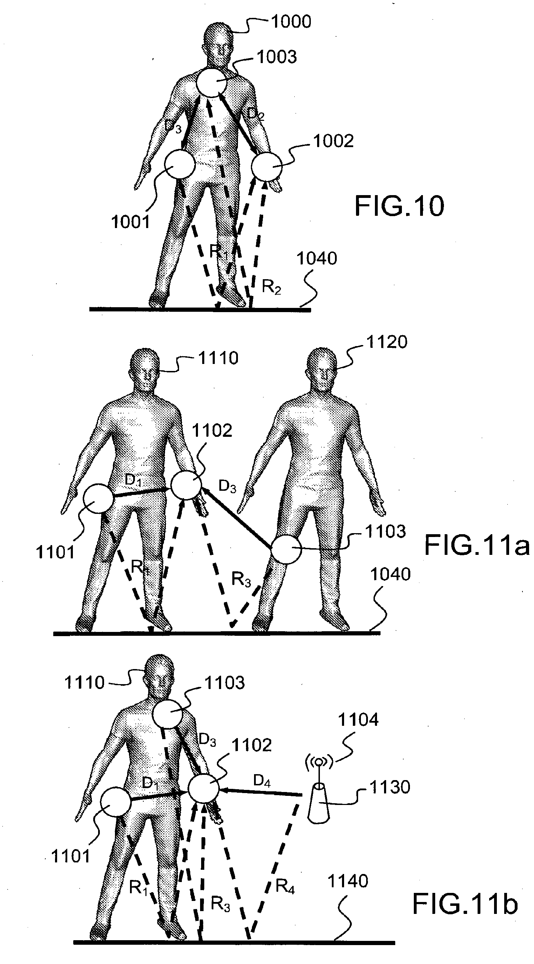

La figure 10 illustre une troisième mise en oeuvre du procédé selon l'invention dans laquelle on positionne, de manière relative, un ensemble de noeuds attachés à un même corps et dont les positions sont a priori inconnues.

Dans l'exemple, trois noeuds 1001, 1002, 1003 sont attachés à un corps humain 1000. Le procédé est utilisé pour positionner chaque noeud par rapport aux deux autres. Des signaux sont transmis entre chaque paire de noeuds, et des mesures de longueur de trajets sont effectuées, dans l'exemple, comme suit :

- estimer, entre le deuxième noeud 1002 et le troisième noeud 1003, la longueur $D_2$ du trajet direct et la longueur $R_2$ du trajet indirect réfléchi sur le sol 1040 ;
- estimer, entre le premier noeud 1001 et le troisième noeud 1003, la longueur $D_3$ du trajet direct (dans l'exemple, aucune mesure de trajet indirect n'est effectuée entre ces deux noeuds) ;
- estimer, entre le premier noeud 1001 et le deuxième noeud 1002, la longueur $R_1$ du trajet indirect réfléchi sur le sol 1040 (dans l'exemple, aucune mesure de trajet direct n'est effectuée entre ces deux noeuds) ;

L'exploitation de la diversité multi-trajets du canal UWB, notamment en prenant en compte des mesures de longueur de trajets $R_1$, $R_2$ liées aux réflexions sur le sol, permet de minimiser les ambiguïtés géométriques pouvant apparaitre si l'on ne s'appuie que sur des mesures liées aux trajets directs. On peut ainsi reconstituer, en relatif, le positionnement des noeuds, des uns par rapport aux autres.

Ce type de positionnement purement relatif peut être utile pour de nombreuses applications, comme par exemple, la reconstitution du mouvement de la personne, le contrôle de l'attachement des noeuds à la personne, la vérification de l'intégrité du réseau formé par ces noeuds.

Les figures 11a et 11b illustrent une quatrième mise en oeuvre du procédé selon l'invention dans laquelle le positionnement d'un noeud mobile 1102 est effectué vis-à-vis d'autres noeuds 1101, 1103 situés à portée de communication.

Dans l'exemple de la figure 11a, un premier noeud 1101 et un deuxième noeud 1102 sont situés sur un premier corps humain 1110, et un troisième noeud 1103 est situé sur un deuxième corps humain 1120, à portée de communication du deuxième noeud 1102. Les positions du premier noeud 1101 et du troisième noeud 1103 sont connues. On cherche à positionner le deuxième noeud 1102. Pour cela, des mesures de longueur de trajet sont effectuées, comme suit :

- estimer, entre le premier noeud 1101 et le deuxième noeud 1102, la longueur $D_1$ du trajet direct et la longueur $R_1$ du trajet indirect réfléchi sur le sol 1140 (mesures intra-BAN);
- estimer, entre le troisième noeud 1103 et le deuxième noeud 1102, la longueur $D_3$ du trajet direct et la longueur $R_3$ du trajet indirect réfléchi sur le sol 1140 (mesures inter-BAN).

Toutes les mesures effectuées dans l'exemple de la figure 11 a sont dues à des transmissions de signaux entre les noeuds du même réseau corporel (BAN lié au premier corps humain 1110) ; ces mesures $D_1$, $R_1$, $D_3$, $R_3$ sont appelées mesures intra-BAN et sont exploitées pour positionner le deuxième noeud 1102.

Dans l'exemple de la figure 11b, un premier noeud 1101, un deuxième noeud 1102 et un troisième noeud 1103 sont situés sur un premier corps 1110 qui évolue à portée de communication d'une station de base fixe 1130, laquelle est appelée aussi « ancre ». La station de base 1130 comporte un noeud 1104. On cherche à déterminer la position absolue du deuxième noeud 1102. Pour cela, des mesures de longueur de trajet sont effectuées, comme suit :

- estimer, entre le premier noeud 1101 et le deuxième noeud 1102, la longueur $D_1$ du trajet direct et la longueur $R_1$ du trajet indirect réfléchi sur le sol 1140 (mesures intra-BAN) ;
- estimer, entre le troisième noeud 1103 et le deuxième noeud 1102, la longueur $D_3$ du trajet direct et la longueur $R_3$ du trajet indirect réfléchi sur le sol 1140 (mesures intra-BAN) ;
- estimer, entre le noeud 1104 de l'ancre 1130 et le deuxième noeud 1102, la longueur $D_4$ du trajet direct et la longueur $R_4$ du trajet indirect réfléchi sur le sol 1140 (mesures ancre-BAN).

Là encore, le deuxième noeud 1102 peut, en utilisant un algorithme de positionnement ou de poursuite (par exemple une méthode de trilatération, la méthode des moindres carrés, un filtrage), exploiter les mesures de longueurs $R_1$, $R_2$, $R_3$, de trajets indirects pour améliorer la précision de son positionnement.

Comme l'illustrent les figures 8a, 8b, 9a, 9b, 10, 11a, 11b, un avantage de la présente invention est de faire bénéficier au système de localisation, à moindre coût, de mesures supplémentaires liées aux réflexions sol, notamment pour :

- lever les ambiguïtés géométriques qui peuvent apparaitre lorsque les mesures de distances sont incomplètes ;
- améliorer la précision du positionnement grâce à la redondance et à la richesse des mesures obtenues ; ou
- permettre un positionnement relatif en fonction de contraintes géométriques et/ou biomécaniques du corps.

L'un ou l'autre des avantages précités est obtenu en fonction des configurations dans lesquelles se trouvent les noeuds de communication.

Ainsi, si pour un lien radio donné, aucun trajet direct ne peut être effectué, alors les mesures de temps de vol associées à des trajets indirects permettent, malgré cette absence, d'obtenir une estimation de la distance entre les deux noeuds dudit lien radio.

Si, a contrario, une mesure de temps de vol est effectuée pour le trajet direct, alors l'obtention de mesures de temps de vol liées à des trajets indirects permet de réduire les ambiguïtés géométriques et/ou d'améliorer la précision du positionnement des noeuds grâce à la redondance et à la richesse des mesures obtenues. En l'absence de ces mesures de distance dues aux trajets indirects, il serait nécessaire de multiplier les mesures vis à vis d'autres noeuds, que ce soit pour déterminer une position absolue (par exemple par trilatération) ou une position relative (par positionnement coopératif).

Plusieurs modes de réalisation du dispositif selon l'invention sont maintenant présentés à titre non limitatif. Selon le mode choisi, les noeuds peuvent être soit des émetteurs, des récepteurs, ou bien les deux à la fois et la métrique de distance peut être différente, par exemple TOA ou TDOA. De plus, le calcul des positions à partir des mesures de distances obtenues peut être soit centralisé, c'est-à-dire effectué par une seule unité de calcul (par exemple dans un noeud d'un BAN), ou décentralisé, autrement dit effectué par plusieurs unités de calcul réparties (par exemple, des unités de calcul réparties dans plusieurs noeuds d'un BAN).

En outre, les mesures de distances obtenues peuvent être issues :

- seulement de trajets indirects entre noeuds, ces trajets étant issus de simples réflexions ; ou
- de trajets directs entre noeuds et de trajets indirects issus de simples réflexions pour tous les liens radio utilisés par le procédé de localisation; ou encore
- de trajets directs uniquement pour certains liens radio et de trajets directs et/ou de simples réflexions pour d'autres liens radio utilisés par le procédé de localisation.

Il faut donc noter que la présence de mesures de trajets directs n'est pas nécessaire pour exécuter le procédé selon l'invention. Parfois, ces mesures de trajets directs sont impossibles à obtenir, car des obstructions empêchent la communication directe entre deux noeuds.

Ainsi, la présence ou non de certains types de trajets dépend principalement des conditions de propagation (par exemple si une obstruction intervient entre l'émetteur et le récepteur). La présence ou non de ces trajets conditionne le type de positionnement qu'il est possible d'obtenir, par exemple un positionnement absolu ou un positionnement relatif. L'absence de certaines mesures de longueurs de trajets peut être subie, si par exemple l'on cherche systématiquement à obtenir le maximum d'informations possibles mais que la détection du trajet direct fait défaut pour des raisons d'obstruction. A contrario, l'absence de ces mesures peut parfois résulter d'un choix délibéré, en se limitant par exemple pour des raisons d'économie d'énergie, aux trajets réfléchis. Par exemple, si l'on est capable d'anticiper une situation d'obstruction, compte tenu du modèle de mobilité biomécanique du corps mobile et des dernières positions estimées, on choisira de ne pas utiliser de mesures se rapportant à des trajets directs.

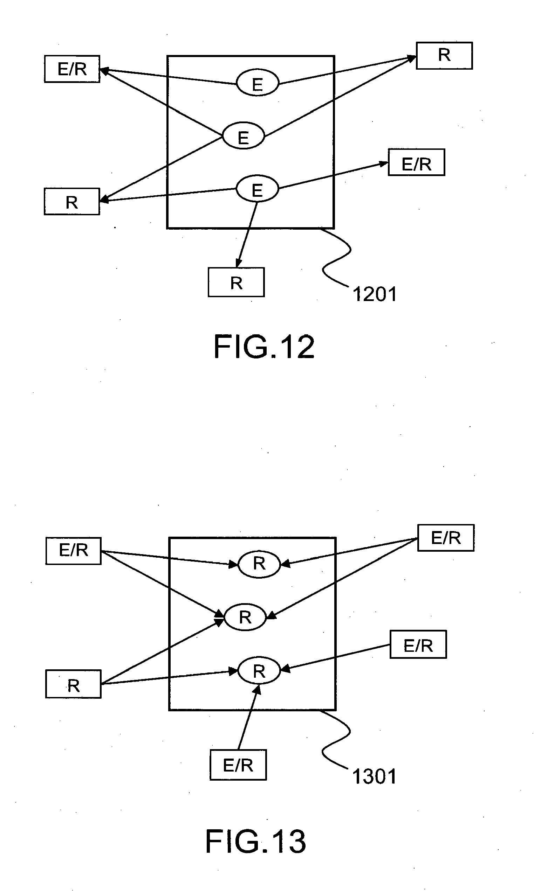

La figure 12 illustre un premier mode de réalisation d'un système selon l'invention dans lequel un corps mobile 1201 comprend des noeuds de type émetteur uniquement. Le corps mobile 1201 peut constituer un réseau corporel (BAN). Les noeuds émetteurs sont représentés par des lettres « E » sur la figure. A portée de communication du corps mobile 1201, se trouvent des noeuds de communication sous la forme de récepteurs, représentés « R » sur la figure, ou d'émetteurs récepteur représentés « E/R » sur la figure. Ces noeuds aptes à la réception permettent d'assurer une liaison radiofréquence avec le corps mobile 1201 via des trajets directs et/ou indirects et, in fine, permettre aux noeuds émetteurs de ce corps mobile 1201 d'être localisés. Les traits fléchés représentent les signaux transmis par les émetteurs.

Une métrique envisageable pour déterminer les distances entre les noeuds est la méthode TDOA qui nécessite une synchronisation des noeuds « récepteurs » et/ou « émetteurs/récepteurs ». Dans cet exemple, le calcul des positions des noeuds du corps mobile 501 s'effectue, de préférence, de manière centralisée et au niveau de l'infrastructure, c'est-à-dire par exemple au niveau des noeuds récepteurs environnant.

La figure 13 illustre un deuxième mode de réalisation d'un système selon l'invention dans lequel un corps mobile 1301 comprend des noeuds de type récepteurs uniquement, représentés par des lettres « R » sur la figure. A portée de communication du corps mobile 1301, se trouvent des des noeuds de communication sous la forme d'émetteurs, représentés « E » sur la figure, ou d'émetteurs/récepteurs, représentés « E/R » sur la figure. Ces noeuds aptes à l'émission permettent d'assurer une liaison radiofréquence avec le corps mobile 1301 via des trajets directs et/ou indirects et, in fine, permettre aux noeuds récepteurs de ce BAN mobile 1301 d'être localisés. Les traits fléchés représentent les signaux transmis par les émetteurs. Une métrique envisageable pour déterminer les distances entre les noeuds est de type temporelle, par exemple la métrique TOA ou la métrique TDOA qui nécessite une synchronisation des noeuds « émetteurs » et/ou « émetteurs/récepteurs ».

Par ailleurs, dans cet exemple, le calcul des positions des noeuds du corps mobile 1301 peut s'effectuer au niveau du corps 1301 lui-même, - de manière centralisée au niveau d'un noeud ou par calcul distribué sur plusieurs noeuds du corps 1301. Le calcul des positions des noeuds du corps mobile 1301 peut également être effectué au niveau de l'infrastructure si les mesures de distance effectuées au niveau des noeuds récepteurs du BAN mobile 1301 sont communiquées à l'infrastructure via d'autres moyens de communication sans fil, par exemple.

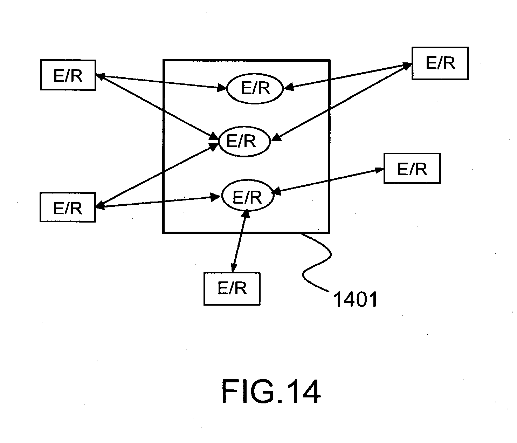

La figure 14 illustre un troisième mode de réalisation d'un système selon l'invention dans lequel un corps mobile 1401 comprend des noeuds de type émetteur/récepteurs uniquement, représentés par des lettres « E/R » sur la figure. A portée de communication du corps mobile 1401, se trouvent des noeuds de communication sous la forme d'émetteurs/récepteurs, également représentés « E/R » sur la figure. Les métriques TOA et TDOA peuvent être utilisées pour ce mode de réalisation et le calcul des positions des noeuds du corps mobile 1401 peut s'effectuer aussi bien au niveau du corps mobile 1401, - de manière centralisée au niveau d'un noeud ou par calcul distribué sur plusieurs noeuds du corps 1401 - qu'au niveau de l'infrastructure.

Les exemples des figures 12, 13, et 14 ne sont ni restrictifs ni exhaustifs, et il appartient à l'homme de l'art de choisir le mode de réalisation qui convient en fonction, notamment, de l'application et des contraintes, par exemple en fonction de la consommation d'énergie visée et de la synchronisation des noeuds. En particulier, ces exemples peuvent être combinés de sorte qu'un corps mobile comprenne, par exemple, à la fois des noeuds émetteurs et des noeuds récepteurs.

L'extraction de plusieurs trajets ou groupes de trajets de propagation entre deux noeuds améliore considérablement les performances des solutions de l'art antérieur dans lesquelles on a, au mieux lorsqu'elle est disponible, la connaissance seule de la distance correspondant au temps de vol le plus court entre les deux noeuds. En particulier, on peut souhaiter séparer le trajet direct entre les deux noeuds du trajet résultant d'une réflexion sur le sol, laquelle réflexion est présente et peut être exploitée dans la grande majorité des applications. En outre, dans un environnement intérieur, on peut également vouloir isoler un trajet de réflexion sur le plafond ou sur tout autre mur ou équipement de mobilier dont la présence pourrait être inférée.

Le procédé selon l'invention s'appuie également sur des relations géométriques déterministes (connues) qui lient les temps d'arrivée de ces mêmes trajets aux positions des noeuds impliqués dans ce(s) lien(s) radio. On peut ainsi espérer apporter de la redondance d'information (par exemple en apportant de nouveaux « trajets-directs-virtuels » via les trajets secondaires détectés) et/ou renforcer la rigidité euclidienne du problème de localisation (au sens de la théorie des graphes), en levant tout ou partie des ambiguïtés géométriques (présentes si l'on s'appuie uniquement sur le trajet direct). In fine, l'exploitation du trajet indirect permet :

- d'améliorer la précision de localisation des noeuds radio (par exemple le positionnement et/ou la poursuite) ;
- de compenser/suppléer les éventuelles pertes de trajet direct occasionnées sur certains liens, soit par l'obstruction du corps porteur (pour les liens intra-BAN) ou de tout obstacle extérieur (pour les liens inter-BAN ou vis-à-vis d'une infrastructure vis-à-vis de dispositifs radio dans un voisinage proche) ;
- de réduire le nombre de liens radio nécessaires pour assurer un certain niveau de précision de localisation des noeuds radio.

Il est à noter que l'exécution du procédé selon l'invention suppose une bonne reproductibilité (c'est-à-dire une cohérence dans le temps et dans l'espace) et une bonne observabilité (c'est-à-dire une détectabilité satisfaisante des trajets au sein de la réponse impulsionnelle) des composantes multi-trajets réfléchies et exploitées. A ce titre, il est privilégié l'exploitation des réflexions au sol, puis au plafond, puis dans une moindre mesure sur des murs ou toutes autres surfaces réfléchissantes verticales de l'environnement (si la distance du BAN concerné à ces surfaces soit suffisamment faible pour autoriser une détection/estimation fiable du trajet correspondant). En outre, il peut être utile de renforcer explicitement la présence des trajets ou composantes réfléchies (par exemple améliorer le rapport signal à bruit de ces trajets, notamment en exploitant des techniques logicielles et/ou matérielles (par exemple des antennes directives).

Le procédé et le dispositif selon l'invention peuvent être employés, par exemple, dans les applications militaires, les applications de sécurité ou de secours, pour lesquelles le coût ou la consommation ne sont pas des facteurs limitant. Plus largement, le procédé et le dispositif selon l'invention sont utilisables dans les dispositifs destinés au grand public, par exemple pour la capture de mouvement, la détection de posture, la navigation, les réseaux sociaux augmentés faisant appel aux liens pair-à-pair, et les services géo-localisés. A titre d'illustration, le dispositif selon l'invention peut permettre la localisation de groupes de personnes mobiles évoluant dans des espaces intérieurs où les dispositifs de localisation par satellite sont inutilisables, comme par exemple les centres commerciaux, les aéroports, les musées, et les sites industriels. Il peut permettre à des utilisateurs de se situer dans une zone et, par exemple, de déterminer des itinéraires d'intérêt ou de bénéficier d'une technique de réalité augmentée.

Le procédé selon l'invention peut permettre aux utilisateurs mobiles de se localiser à l'intérieur d'un bâtiment, de calculer des itinéraires vers des centres d'intérêts, de rechercher des contacts à proximité géographique ou de bénéficier de certains services de type web 2.0 en fonction de leurs positions géographiques, comme par exemple, les réseaux sociaux, la réalité augmentée.

Un autre type d'application envisageable est le guidage et le positionnement d'objets mobiles, par exemple les robots, véhicules autoguidés en environnement intérieur ou extérieur, par exemple en milieu industriel, domotique, sur des routes. Un exemple de scénario possible est le « Robot Taxi » dont l'objectif est d'optimiser et de coordonner en temps réel le déplacement de taxis autoguidés en fonction des conditions de circulation et de trafic en ville. On peut notamment se reporter à la publication SENSEI: Integrating the Physical with the Digital World of the Network of the Future, FP7 Contract Number : 215923, livrable numéro D1.1, Janvier 2008. Un autre exemple de scénario est le suivi et le positionnement en temps réel de véhicules au niveau des chaînes de montage dans l'industrie automobile.

## Revendications

1. Procédé de localisation d'un premier noeud de communication sans fil (802, 902, 1002, 1102) compris par un corps mobile (800, 900, 1000, 1110), ledit premier noeud étant à portée de transmission d'au moins un deuxième noeud (801, 901, 903, 1001, 1003, 1101, 1103, 1004) également compris par ledit corps mobile, lesdits noeuds étant aptes à émettre et/ou recevoir des signaux radiofréquence, ledit procédé étant **caractérisé en ce qu'**il comprend au moins les étapes suivantes :

    o effectuer au moins une mesure de temps de vol d'un trajet indirect de signal ultra large bande transmis entre le premier noeud et le deuxième noeud, ledit trajet étant issu d'une unique réflexion sur une surface (840, 940, 1040, 1140) externe au dit corps, entre le premier noeud et le deuxième noeud ;
    o exploiter ladite mesure de temps de vol pour localiser le premier noeud au moins par rapport au deuxième noeud ;
    et **en ce que** le premier noeud et le deuxième noeud sont attachés à un même corps articulé pourvu de contraintes mécaniques ou bio-mécaniques connues, la position du deuxième noeud sur ledit corps articulé étant connue, le procédé comprenant aussi une étape d'exploitation conjointe de ladite position connue du deuxième noeud, desdites contraintes mécaniques ou bio-mécaniques, et du temps de vol mesuré dudit trajet indirect pour déterminer la localisation du premier noeud.

**2.** Procédé de localisation selon la revendication 1, dans lequel la mesure de temps de vol est effectuée en estimant la réponse impulsionnelle du canal de transmission entre le premier noeud (802, 902, 1002, 1102) et le deuxième noeud (801, 901, 903, 1001, 1003, 1101, 1103, 1004) et en extrayant de ladite réponse impulsionnelle au moins un temps de vol correspondant à un trajet ayant subi une réflexion entre son émission et sa réception.

**3.** Procédé de localisation selon l'une quelconque des revendications précédentes, dans lequel le trajet indirect est issu d'une réflexion sur le sol.

**4.** Procédé de localisation selon l'une quelconque des revendications précédentes, dans lequel :

   • soit ledit signal est émis par le premier noeud et reçu par le deuxième noeud ;
   • soit ledit signal est émis par le deuxième noeud et reçu par le premier noeud.

**5.** Procédé de localisation selon l'une quelconque des revendications précédentes, dans lequel l'étape de localisation du premier noeud (902, 1002, 1102) au moins par rapport au deuxième noeud (901, 1001, 1101) est effectuée en exploitant conjointement ladite mesure de temps de vol du trajet indirect entre le premier noeud et le deuxième noeud, et au moins une mesure de trajet direct entre le premier noeud et un autre noeud (903, 1003, 1103) compris par le corps mobile (900, 1000, 1110).

**Patentansprüche**

**1.** Lokalisierungsverfahren eines ersten drahtlosen Kommunikationsknotens (802, 902, 1002, 1102) auf einem bewegbaren Körper (800, 900, 1000, 1110), wobei der erste Knoten in Übertragungsreichweite mindestens eines zweiten Knotens (801, 901, 903, 1001, 1003, 1101, 1103, 1004) ist, der ebenfalls auf dem bewegbaren Körper ist, wobei die Knoten imstande sind, Funkfrequenzsignale zu senden und/oder zu empfangen, wobei das Verfahren **dadurch gekennzeichnet ist, dass** es mindestens die folgenden Schritte umfasst:

   ◦ Durchführen mindestens einer Flugzeitmessung eines indirekten Wegs eines zwischen dem ersten Knoten und dem zweiten Knoten übertragenen Ultrabreitbandsignals, wobei sich der Weg aus einer einzigen Reflexion auf einer zum Körper externen Fläche (840, 940, 1040, 1140) zwischen dem ersten Knoten und dem zweiten Knoten ergibt,
   ◦ Verwenden der Flugzeitmessung zur Lokalisierung des ersten Knotens mindestens im Verhältnis zum zweiten Knoten,

und dass der erste Knoten und der zweite Knoten an einem selben Gelenkkörper mit bekannten mechanischen oder biomechanischen Beanspruchungen angebracht sind, wobei die Position des zweiten Knotens auf dem Gelenkkörper bekannt ist, wobei das Verfahren auch einen Schritt der gemeinsamen Verwendung der bekannten Position des zweiten Knotens, der mechanischen oder biomechanischen Beanspruchungen und der gemessenen Flugzeit des indirekten Wegs umfasst, um die Lokalisierung des ersten Knotens zu bestimmen.

**2.** Lokalisierungsverfahren nach Anspruch 1, wobei die Flugzeitmessung durch Schätzen der Impulsantwort des Übertragungskanals zwischen dem ersten Knoten (802, 902, 1002, 1102) und dem zweiten Knoten (801, 901, 903, 1001, 1003, 1101, 1103, 1004) und durch Extrahieren aus der Impulsantwort mindestens einer Flugzeit, die einem Weg entspricht, der zwischen seiner Sendung und seinem Empfang eine Reflexion erfahren hat, durchgeführt wird.

**3.** Lokalisierungsverfahren nach einem der vorangehenden Ansprüche, wobei sich der indirekte Weg aus einer Reflexion auf dem Boden ergibt.

**4.** Lokalisierungsverfahren nach einem der vorangehenden Ansprüche, wobei:

   • entweder das Signal von dem ersten Knoten gesendet und von dem zweiten Knoten empfangen wird,
   • oder das Signal von dem zweiten Knoten gesendet und von dem ersten Knoten empfangen wird.

**5.** Lokalisierungsverfahren nach einem der vorangehenden Ansprüche, wobei der Lokalisationsschritt des ersten Knotens (902, 1002, 1102) mindestens im Verhältnis zum zweiten Knoten (901, 1001, 1101) durch gemeinsame Verwendung der Flugzeitmessung des indirekten Wegs zwischen dem ersten Knoten und dem zweiten Knoten und mindestens einer Messung des direkten Wegs zwischen dem ersten Knoten und einem anderen Knoten (903, 1003, 1103) auf dem bewegbaren Körper (900, 1000, 1110) durchgeführt wird.

## Claims

1. A method for locating a first wireless communication node (802, 902, 1002, 1102) on a movable body (800, 900, 1000, 1110), said first node being within the transmission range of at least one second node (801, 901, 903, 1001, 1003, 1101, 1103, 1004) that is also on said movable body, said nodes being suitable to transmit and/or receive radiofrequency signals, said method being **characterised in that** it comprises at least the following steps:

   ∘ carrying out at least one measurement of the flight time of an indirect path of an ultra-wide band signal transmitted between said first node and said second node, said path coming from a single reflection on a surface (840, 940, 1040, 1140) outside of said body, between said first node and said second node;
   ∘ using said measurement of the flight time to locate said first node at least relative to said second node;

   and **in that** said first node and said second node are attached to a same articulated body provided with known mechanical or biomechanical constraints, the position of said second node on said articulated body being known, said method further comprising a step of jointly using said known position of said second node, said mechanical or biomechanical constraints and the measured flight time of said indirect path in order to determine the location of said first node.

2. The locating method according to claim 1, wherein the measurement of the flight time is carried out by estimating the pulse response of the transmission channel between said first node (802, 902, 1002, 1102) and said second node (801, 901, 903, 1001, 1003, 1101, 1103, 1004) and by extracting at least one flight time from said pulse response that corresponds to a path that has undergone a reflection between its transmission and its reception.

3. The locating method according to any one of the preceding claims, wherein said indirect path comes from a ground reflection.

4. The locating method according to any one of the preceding claims, wherein:

   • either said signal is transmitted by said first node and received by said second node;
   • or said signal is transmitted by said second node and received by said first node.

5. The locating method according to any one of the preceding claims, wherein said step of locating said first node (902, 1002, 1102) at least relative to said second node (901, 1001, 1101) is carried out by jointly using said measurement of the flight time of the indirect path between said first node and said second node and at least one measurement of the direct path between said first node and another node (903, 1003, 1103) on said movable body (900, 1000, 1110).

FIG.1a

FIG.1b

FIG.1c

FIG.2

FIG.3

FIG.4

**511**

| 501 | TOA₁<br>TOAₙ → | 502 | → (x, y, z) |

$$\begin{array}{ccc} \boxed{\underline{501}} & \xrightarrow{\text{TOA}_1\ \text{TOA}_n} & \boxed{\underline{502}} \xrightarrow{(x,\,y,\,z)} \end{array}$$

## FIG.5

**600a**

$$\boxed{\underline{601a}} \rightarrow \boxed{\underline{602a}} \rightarrow \boxed{\underline{603a}} \rightarrow \boxed{\underline{604a}} \rightarrow \boxed{\underline{606a}} \begin{array}{l}\text{TOA}_1\\\text{TOA}_2\end{array}$$

$$\boxed{\underline{605a}} \rightarrow \boxed{\underline{607a}} \ \text{Data}$$

## FIG.6

**600b**

$$\boxed{\underline{601b}} \rightarrow \boxed{\underline{603b}} \rightarrow \boxed{\underline{604b}} \rightarrow \boxed{\underline{606b}} \begin{array}{l}\text{TOA}_1\\\text{TOA}_2\end{array}$$

$$\boxed{\underline{605b}} \rightarrow \boxed{\underline{607b}} \ \text{Data}$$

## FIG.6b

**600c**

$$\boxed{\underline{601c}} \rightarrow \boxed{\underline{602c}} \rightarrow \boxed{\underline{603c}} \rightarrow \boxed{\underline{604c}} \rightarrow \boxed{\underline{606c}} \begin{array}{l}\text{TOA}_1\\\text{TOA}_2\end{array}$$

$$\boxed{\underline{603c}} \rightarrow \boxed{\underline{607c}} \ \text{Data}$$

$$\boxed{\underline{605c}}$$

## FIG.6c

FIG.7

FIG.8a

FIG.8b

FIG.9a

FIG.9b

FIG.10

FIG.11a

FIG.11b

FIG.12

FIG.13

FIG.14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008143379 A1
- WO 2005096568 A1
- US 20080077326 A1
- WO 2007093641 A2
- US 20080223131 A1
- WO 2007067821 A2
- US 7397379 B2
- WO 2009077510 A
- US 20080198072 A1

**Littérature non-brevet citée dans la description**

- **N. PATWARI ; J.N. ASH ; S. KYPEROUNTAS ; A.O. HERO ; R.L. MOSES ; N.S. CORREAL.** Locating the nodes: coopérative localization in wireless sensor networks. *Signal Processing Magazine, IEEE,* 22 Juillet 2005, 54-69
- **C.P. FIGUEIREDO ; N.S. DIAS ; P.M. MENDES.** 3D localization for biomedical wireless sensor networks using a microantenna. *Wireless Technology, 2008. EuWiT 2008. European Conference,* 2008, 45-48
- **C. GUO ; J. WANG ; R.V. PRASAD ; M. JACOBS-SON.** Improving the Accuracy of Person Localization with Body Area Sensor Networks: An Experimental Study. *Consumer Communications and Networking Conference, 2009. CCNC 2009. 6th IEEE,* 2009, 1-5
- **H. REN ; M.Q. MENG ; L. XU.** Indoor Patient Position Estimation Using Particle Filtering and Wireless Body Area Networks. *Engineering in Medicine and Biology Society, 2007. EMBS 2007. 29th Annual International Conference of the IEEE,* 2007, 2277-2280
- **F. CHITI ; R. FANTACCI ; F. ARCHETTI ; E. MESSINA ; D. TOSCANI.** An Integrated Communications Framework for Context Aware Continuous Monitoring with Body Sensor Networks. *IEEE Journal on Selected Areas in Communications,* Mai 2009, vol. 27 (4
- **W. YANG et al.** Time-Domain Investigating Path Loss Characteristics of UWB Signals in Indoor line-of-sight Environment. *2nd IEEE International Conference on Wireless Communications, Networking and Mobile Computing,* 2006
- **T. ZASOWSKI et al.** Propagation Effects in UWB Body Area Networks. *IEEE ICU,* 2005
- **R. FORT et al.** Ultra-Wideband Channel Model for Communication Around the Human Body. *IEEE Journal on Selected Areas in Communications,* 2006, vol. 24 (4), 927-933
- **FORT et al.** Ultra Wide-band Body Area Channel Model. *IEEE ICC,* 2005, vol. 4, 2840-2844
- **M. NAJAR ; J. VIDAL.** Kalman Tracking for Mobile Location in NLOS Situations. *Proc. IEEE PIMRC'03,* Septembre 2003, vol. 3, 2203-2207
- **B. DENIS ; L. OUVRY ; B. UGUEN ; F. TCHOF-FO-TALOM.** Advanced Bayesian Filtering Techniques for UWB Tracking Systems in Indoor Environments. *Proc. IEEE International Conference on Ultra-wideband,* Septembre 2005, 638-643
- **J. YOUSSEF ; B. DENIS ; C. GODIN ; S. LESECQ.** Enhanced UWB Indoor Tracking through NLOS TOA Bias Estimation. *IEEE Global Communications Conference 2008,* Novembre 2008
- **V. LA TOSA ; B. DENIS ; B. UGUEN.** Maximum Averaged Likelihood Estimation Tree for Anchor-Less Localization Exploiting IR-UWB Multipaths. *Proc. IEEE VTC-Spring'10,* Mai 2010
- **W. GUO ; N. P. FILER.** 2.5D Indoor Mapping and Location Sensing using an Impulse Radio Network. *Proc. IRR Seminar on Ultra Wideband Systems, Technologies and Applications,* Avril 2006, 211-215
- **F. ALTHAUS ; F. TROESCH ; A. WITTNEBEN.** UWB Geo-Regioning in Rich Multipath Environment. *IEEE,* 2005
- **F. ALTHAUS ; F. TROESCH ; A. WITTNEBEN.** UWB Geo-Regioning in Rich Multipath Environment. *VTC fall,* 2005
- **FRANK ALTHAUS ; FLORIAN TROESCH ; ARMIN WITTNEBEN.** *Geo-Regioning for UWB Networks, IST FA*
- **C. STEINER ; F. ALTHAUS ; A. WITTNEBEN.** On the Performance of UWB Geo-Regioning. *SPAWC,* 2006
- Exploitation des Capacités de Radiolocalisation des Transmissions Ultra-Large Bande dans les Réseaux Sans-fil. **B. DENIS.** Thèse de Doctorat. Institut National des Sciences Appliquées, Décembre 2005, 163-180

- **J. HOGBORN.** Aperture Synthesis with a Non-Regular Distribution of Interferometer Baselines. *Astron. and Astrophys.,* 1974, vol. 15

- **D. MACAGNANO.** MAC Performances for Localization and Tracking in Wireless Sensor Networks. *Proceedings of the 4th Workshop on Positioning, Navigation and Communication (WPNC),* Mars 2007